# EUROPEAN PATENT APPLICATION

(11) **EP 2 563 023 A1**
(43) Date of publication of application: **27.02.2013**
(21) Application number: 12173643.3
(22) Date of filing: 26.06.2012
(51) Int. Cl.: H04N 13/02

(54) **Image processing apparatus and control method thereof.**

(30) Priority: 22.08.2011 KR 20110083474
(71) Applicant: Samsung Electronics Co., Ltd., Suwon-si, Gyeonggi-do, 443-742 (KR)
(72) Inventor: LEE, Mi-yeon, Gyeonggi-do (KR)
(74) Representative: Fearnside, Andrew Simon

(57) **Abstract**

A control method of an image processing apparatus, the method including: receiving a two-dimensional (2D) video signal containing a plurality of 2D video frames; offsetting an object in a first frame among the plurality of 2D video frames so as to generate a three-dimensional (3D) video frame corresponding to the 2D video frame; and generating the 3D video frame corresponding to the first frame by compensating a hole area of pixel data generated by the offsetting of the object in the first frame based on a preset reference frame.

## Description

### BACKGROUND

### 1. Field

Apparatuses and methods consistent with the exemplary embodiments relate to an image processing apparatus for processing a video signal to be displayed as a three-dimensional (3D e.g. stereoscopic) image and a control method thereof, and more particularly to an image processing apparatus and a control method thereof, which can compensate for a blank area of video data generated in a 3D image while processing a video signal into the 3D image.

### 2. Description of the Related Art

An image processing apparatus processes a video signal received from outside of the apparatus or the exterior by various processes, and displays the processed video signal on its own display panel or outputs the processed video signal to another image processing apparatus. Such a video signal is divided into a two-dimensional (2D) video signal and a 3D video signal. The 2D video signal corresponding to a 2D image having no distinction between a left-eye image and a right-eye image, and the 3D video signal corresponding to a 3D image having a distinction between the left-eye image and the right-eye image. According to whether the received video signal corresponds to the 2D image or the 3D image, the image processing apparatus selectively processes the corresponding video signal.

In the case of processing the 3D video signal, the image processing apparatus processes the left-eye image and the right-eye image to be alternately displayed, so that a user can feel a 3D effect based on binocular parallax.

Such a displayed 3D image may be based on a 3D video signal as originally input to the image processing apparatus, or based on left- and right-eye images generated from a 2D video signal input to the image processing apparatus.

In the former case, materialization is easy and image quality has to be compensated, while a relatively large amount of data is processed.

In the latter case, a relatively small amount of data is processed and a 3D image is displayed based on the 2D video signal, while a hole area where video data is lost in the displayed 3D image is generated. Such a hole area deteriorates image quality of the 3D image.

### SUMMARY

According to the present invention there is provided an apparatus and method as set forth in the appended claims. Other features of the invention will be apparent from the dependent claims, and the description which follows.

According to an aspect of an embodiment, there is provided a control method of an image processing apparatus, the method including: receiving a two-dimensional (2D) video signal containing a plurality of 2D video frames; offsetting an object in a first frame among the plurality of 2D video frames so as to generate a three-dimensional (3D, e.g. stereoscopic) video frame corresponding to the 2D video frame; and generating the 3D video frame corresponding to the first frame by compensating a hole area of pixel data generated due to the offset on the basis of a preset reference frame.

The reference frame may be generated on the basis of at least one second frame different from the first frame among the plurality of 2D video frames.

The generating the 3D video frame corresponding to the first frame may include: determining a pixel area corresponding to the hole area in the reference frame; and applying pixel data of the determined pixel area in the reference frame to the hole area.

The determining a pixel area corresponding to the hole area in the reference frame may include: compensating the hole area with pixel data of at least one second frame different from the first frame among the plurality of 2D video frames if determined that a pixel area corresponding to the hole area is not present in the reference frame; and updating the reference frame on the basis of the pixel data compensating for the hole area.

The 2D video signal may further include the reference frame, and the generating the 3D video frame corresponding to the first frame may include extracting and storing the reference frame from the 2D video signal.

The generating the 3D video frame corresponding to the first frame may include displaying the generated 3D video frame.

Another aspect may be achieved by providing an image processing apparatus including: a video receiver which receives a two-dimensional (2D) video signal containing a plurality of 2D video frames; and a video processor which offsets an object in a first frame among the plurality of 2D video frames, and generates a three-dimensional (3D) video frame corresponding to the first frame by compensating a hole area of pixel data generated due to the offset on the basis of a preset reference frame.

The video processor may generate the reference frame on the basis of at least one second frame different from the first frame among the plurality of 2D video frames.

The video processor may determine a pixel area corresponding to the hole area in the reference frame; and apply pixel data of the determined pixel area in the reference frame to the hole area.

The video processor may compensate the hole area with pixel data of at least one second frame different from the first frame among the plurality of 2D video frames if determined that a pixel area corresponding to the hole area is not present in the reference frame, and update the reference frame on the basis of the pixel data compensating for the hole area.

The 2D video signal may further include the reference frame, and the video processor may extract and store the reference frame from the 2D video signal.

The image processing apparatus may further include a display unit which displays the generated 3D video frame.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 is a block diagram of an image processing apparatus according to an exemplary embodiment;
FIG. 2 shows a method of generating a 3D video frame based on a 2D video frame in the image processing apparatus of FIG. 1;
FIG. 3 shows a method of compensating for a hole area on the 3D video frame of FIG. 2;
FIG. 4 shows an example of a method for generating and updating a reference frame of FIG. 3;
FIG. 5 is a control flowchart showing a method for compensating for the hole area on the 3D video frame in the image processing apparatus of FIG. 1; and
FIGs. 6 and 7 are control flowcharts showing a method of generating and updating the reference frame in the image processing apparatus of FIG. 1.

### DETAILED DESCRIPTION OF EXEMPLARY EMBODIMENTS

Below, exemplary embodiments will be described in detail with reference to accompanying drawings.

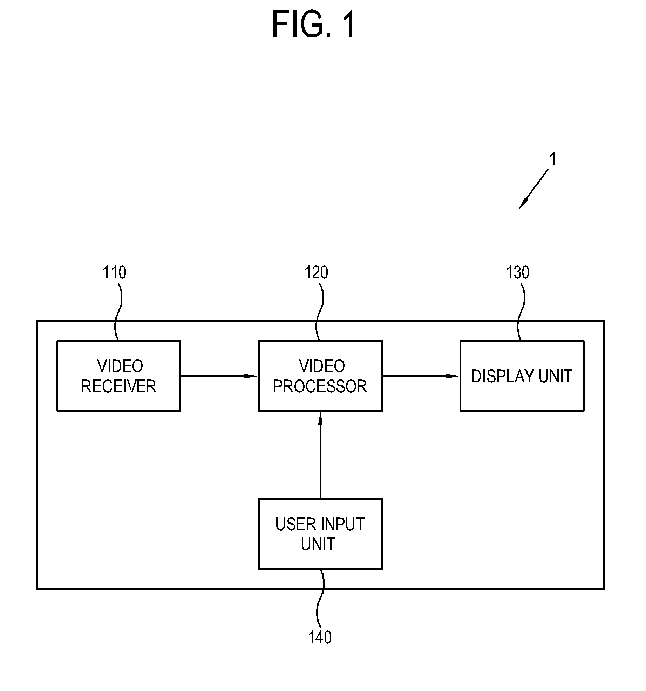

FIG. 1 is a block diagram of an image processing apparatus according to an exemplary embodiment.

Any apparatus may be used as the image processing apparatus 1 in this exemplary embodiment without limitation as long as it can process a video signal/video data received from outside of the apparatus or stored therein to be displayed by various methods.

For example, the image processing apparatus 1 may be achieved by a television, a monitor, etc. provided with a display panel such as a liquid crystal display (LCD) panel or a plasma panel so that it can display an image. Alternatively, the image processing apparatus 1 may be achieved by a set-top box, a digital versatile disc (DVD)/Blu-ray disc (BD) player, etc., which is not provided with a display panel and outputs the processed image to the external TV or monitor.

In the case of receiving a 2D video signal, the image processing apparatus 1 displays a 2D image corresponding to the 2D video signal, or a 3D image based on left- and right-eye images from the 2D video signal. Of course, in the case of receiving a 3D video signal, the image processing apparatus 1 may display a 3D image corresponding to the 3D video signal.

As shown in FIG. 1, the image processing apparatus 1 includes a video receiver 110 to receive a video signal from the exterior, a video processor 120 to process the video signal received in the video receiver 110 according to preset video processes, a display unit 130 to display a video signal processed by the video processor 120 as an image, and a user input unit 140 handled by a user to control operations of the image processing apparatus 1.

Below, detailed configurations of the image processing apparatus 1 will be described.

The video receiver 110 receivers a 2D/3D video signal and transmits the video signal to the video processor 120, which can be achieved variously corresponding to the formats of the received video signal and the materialization of the image processing apparatus 1. For example, the video receiver 110 may wirelessly receive a radio frequency (RF) signal from a broadcasting station (not shown), or use a wire to receive a video signal based on standards such as composite video, component video, super video, Syndicat des Constructeurs des Appareils Radiorécepteurs et Téléviseurs (SCART), high definition multimedia interface (HDMI), etc. If the video signal is a broadcasting signal, the video receiver 110 includes a tuner tuned to channels to receive the broadcasting signal.

The video processor 120 performs various preset processes with regard to a video signal. The video processor 120 implements these processes and outputs a video signal to the display unit 130, so that an image can be displayed on the display unit 130.

There is no limit to the kinds of processes to be performed in the video processor 120. For example, the processes may include decoding and encoding corresponding to various video formats, de-interlacing, frame refresh rate conversion, scaling, noise reduction for improving picture quality, detail enhancement, line scanning, etc. The video processor 120 may be achieved in a group of individual elements capable of independently processing these processes, or a system-on-chip (SOC) where various functions are integrated.

The display unit 130 is achieved by various display panels such as a liquid crystal display (LCD) panel or a plasma display panel (PDP), and displays an image based on the video signal processed by the video processor 120 on the surface thereof. The display unit 130 displays a video frame formed by vertically arranging scan lines of the video signal output from the video processor 120 on the surface thereof.

The user input unit 140 is operated by a user, and transmits a user command for designating a certain processing operation of the video processor 120 to the video processor 120 in response to the operation. The user input unit 140 has to be operated by a user, and it is thus achieved by a menu-key or control panel provided outside the image processing apparatus 1, or a remote controller provided separately from the image processing apparatus 1.

With this configuration, the video processor 120 generates a 3D image from a 2D video signal if the video signal received in the video receiver 110 is the 2D video signal, and processes the generated 3D image to be displayed on the display unit 130. The video processor 120 can process the video signal to be displayed per frame on the display unit 130. In this case, the video processor 120 generates a left-eye video frame and a right-eye video frame from a 2D video frame of a 2D video signal.

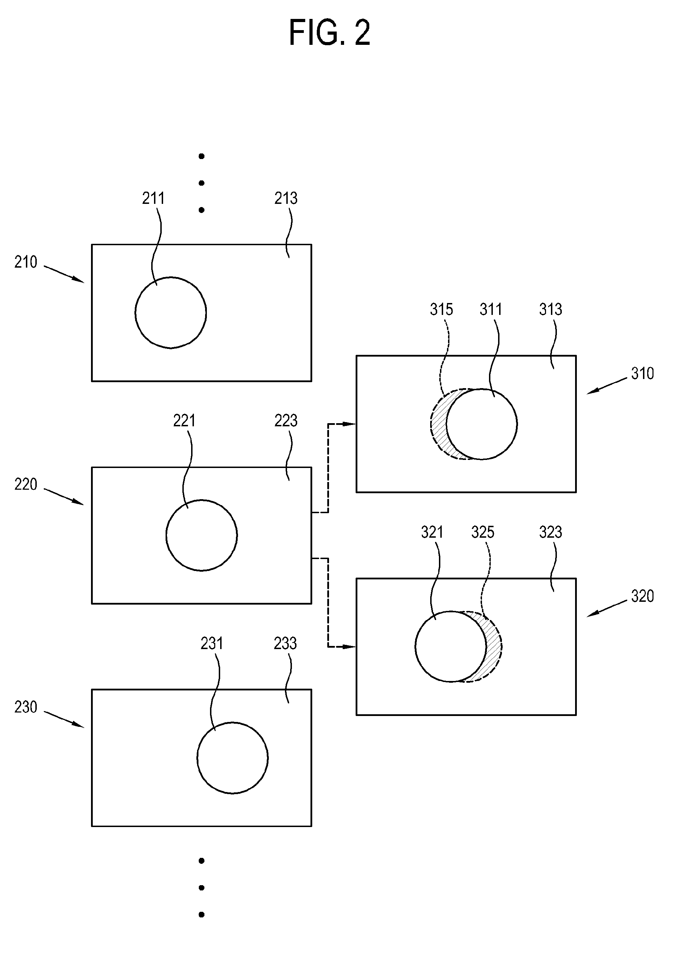

Below, a method of generating a left-eye video frame 310 and a right-eye video frame 320 from 2D video frames 210, 220 and 230 by the video processor 120 will be described with reference to FIG. 2. FIG. 2 shows a method of generating 3D video frames 310 and 320 from the 2D video frames 210, 220 and 230.

As shown in FIG. 2, the video processor 120 extracts the plurality of 2D video frames 210, 220 and 230 from the 2D video signal in chronological order. If displaying a 2D image, the video processor 120 processes the 2D video frames 210, 220 and 230 to be sequentially displayed on the display unit 130.

On the other hand, if displaying a 3D image, the video processor 120 generates the 3D video frames 310 and 320 from each of the 2D video frames 210, 220 and 230. For instance, if the left-eye video frame 310 and the right-eye video frame 320 are generated from one 2D video frame 220, it is as follows.

First, the video processor 120 segments the 2D video frame 220 into an object 221 and a background 223.

The object 221 corresponds to a pixel area to which a user's binocular parallax is applied within the video frame, and the background 223 corresponds to a pixel area excluding the object 221 from the video frame. That is, the segmentation between the objects 211, 221, 231 and the background 213, 223 and 233 in the pixel area of one video frame may be variously designated according to selection methods, and it is relative.

For example, if a ball is an object to be stereoscopically recognized within an image where the ball rolls, the ball is segmented as an object 221 within the video frame and the rest of the video frame except for the object are segmented as the background 223.

The video processor 120 shifts the object 221 against the background 223 by a preset vector value within the 2D video frame 220. This vector value is provided for each of a user's left and right eyes. For example, there may be a first vector value for shifting the object 221 against the background 223 by a first pixel value in a first direction, and a second vector value for shifting the object 221 against the background 223 by a second pixel value in a second direction.

Here, the first direction, the second direction, the first pixel value and the second pixel value are distinctively designated for convenience, and thus their specific directions and numerical values may vary depending on conditions without limitation.

The video processor 120 applies the first vector value and the second vector value to the 2D video frame and generates the left-eye video frame 310 and the right-eye video frame 320, respectively. That is, the video processor 120 offsets the object 221 in the 2D video frame 220 on the basis of the first and second vector values, thereby generating the left-eye video frame 310 and the right-eye video frame 320.

However, the left-eye video frame 310 and the right-eye video frame 320 result from shifting the object 221 within the 2D video frame 220, and therefore hole areas 315 and 325 of pixel data are generated in some area of the backgrounds 313 and 323 adjacent to the objects 311 and 321. The hole areas 315 and 325 are generated at different positions in the left-eye video frame 310 and the right-eye video frame 320, respectively.

The hole areas 315 and 325 are pixel areas excluding the video data. Thus, if the hole areas 315 and 325 are not compensated, the image displayed on the display unit 130 is deteriorated in quality. Accordingly, the video processor 120 in this exemplary embodiment compensates for the hole areas 315 and 325 by the following methods.

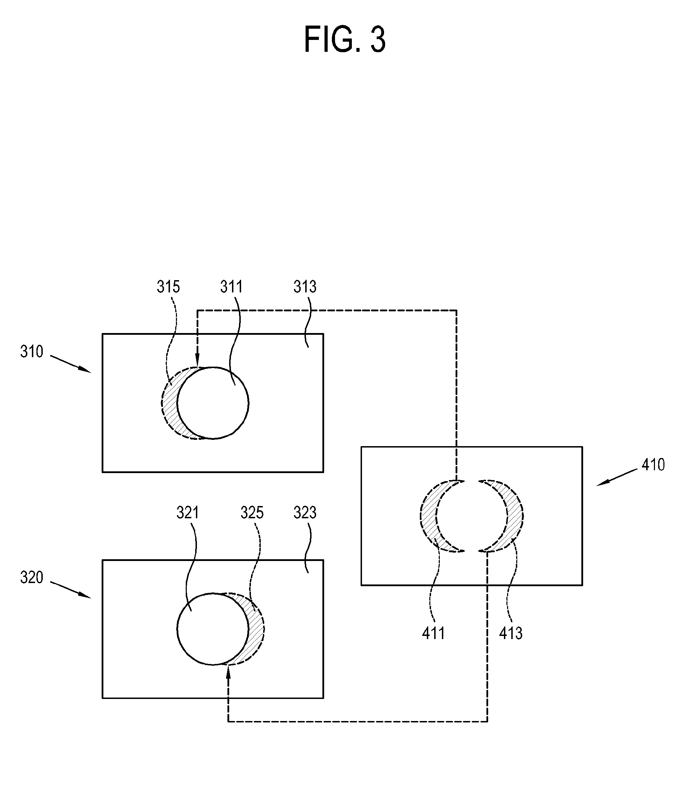

FIG. 3 shows a method of compensating for the hole areas 315 and 325 on the 3D video frame of FIG. 2.

As shown in FIG. 3, the video processor 120 generates the left-eye video frame 310 and the right-eye video frame 320 as described above. Then, the video processor 120 compensates for the hole areas 315 and 325 based on a preset reference frame 410, and thus generates 3D video frames 310 and 320 corresponding to a 2D video frame 220 (see FIG. 2). The reference frame 310 in this exemplary embodiment may be generated by various methods, which will be described later.

Thus, the hole areas 315 and 325, blank areas of data, are filled with the video data, thereby ensuring the quality of a displayed image.

To compensate for the hole areas 315 and 325, the video processor 120 determines which pixel position the video data corresponding to the hole areas 315 and 325 is in on the reference frame 410, i.e., determines pixel areas corresponding to the hole areas 315 and 325 in the reference frame 410.

Such a determination method may vary depending on designing methods. For example, in the case of the left-eye video frame 310, the video processor 120 compares a data distribution pattern of the pixel area in the background 313 with a data distribution pattern of the pixel area in the reference frame 410, thereby determining a corresponding pixel area 411 in the reference frame 410. In the right-eye video frame 320, the pixel area 413 can be also determined like that of the left-eye video frame 310,

Also, the video processor 120 may calculate a motion vector between the reference frame 410 and the backgrounds 313 and 323 and determine the corresponding pixel areas 411 and 413 based on the calculated motion vector. That is, the motion vector can be calculated according to which position on the reference frame 410 a predetermined pixel area of the backgrounds 313 and 323 corresponds to, and it is possible to determine the corresponding pixel areas 411 and 413 in the reference frame 410 if such a calculated motion vector is applied to the hole areas 315 and 325.

The reference frame 410 is an image containing video data corresponding to the background 223 (see FIG. 2) within the 2D video frame 220 (see FIG. 2). The reference frame 410 may include a plurality of images according to the contents and kinds of the background 223 (see FIG. 2), relative angles viewed by a user, or etc.

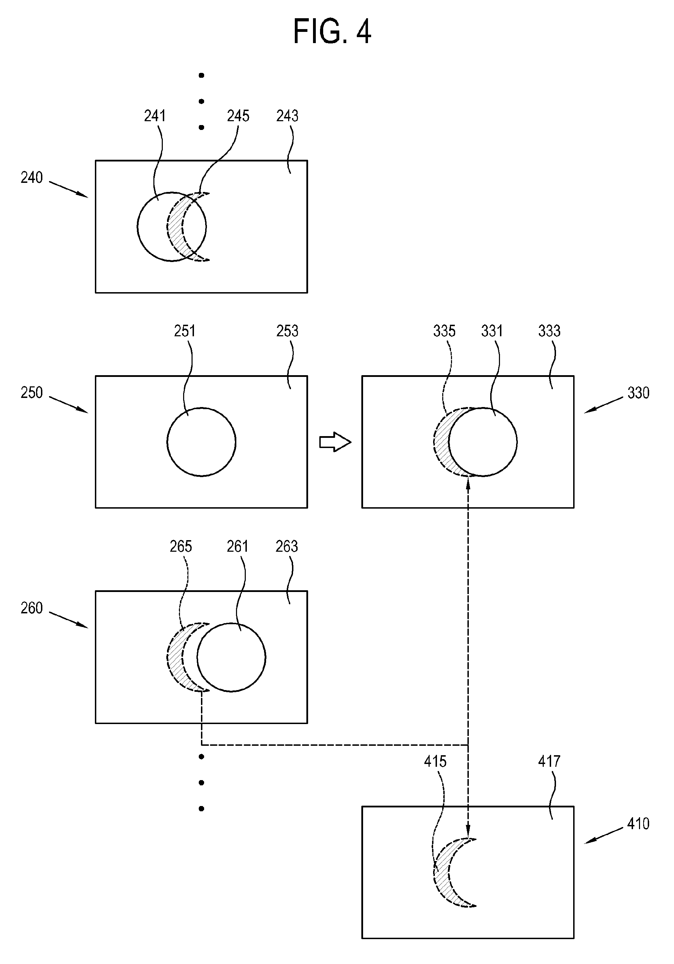

The reference frame 410 may be generated by various methods, an example of which will be described with reference to FIG. 4.

FIG. 4 shows an example of a method for generating the reference frame 410 from the 2D video frames 240, 250 and 260 using the image processor 120. In FIG. 4, the reference frame 410 is not initially provided.

As shown in FIG. 4, the video processor 120 extracts a plurality of 2D video frames 240, 250 and 260 in chronological order from the 2D video signal. Further, as described above with reference to FIG. 2, the video processor 120 generates a 3D video frame from each of the 2D video frames 240, 250 and 260. FIG. 4 shows a case that the left-eye video frame 330 is generated from the 2D video frame 250.

The video processor 120 offsets the object 251 to the background 253 of the 2D video frame 250, and generates the left-eye video frame 330. In the left-eye video frame 330, the hole area 335 is generated between the object 331 and the background 333.

Here, the video processor 120 compensates for the hole area 335 on the basis of the 2D video frames 240 and 260 different from the 2D video frame 250 used as a source of the left-eye video frame 330 among the plurality of 2D video frames 240, 250 and 260.

More specifically, the left-eye video frame 330 is generated from the second frame 250 among the plurality of 2D video frames 240, 250 and 260, and there are the first frame 240 and the third frame 260 different from the second frame 250.

The video processor 120 determines motion vectors of the objects 241, 251 and 261 and the background 243, 253 and 263 in the first, second and third frames 240, 250 and 260, and obtains the pixel areas 245 and 265 corresponding to the hole area 335 from the backgrounds 243 and 263 of the first or third frames 240 and 260 in accordance with determination results.

The video processor 120 determines which one of the obtained pixel areas 245 and 265 contain all the video data corresponding to the hole area 335. For example, the pixel area 245 of the first frame 240 contains video data of a part of the area corresponding to the background 243 and contains video data of a part of the area corresponding to the object 241. Therefore, the video processor 120 may select the pixel area 265 of the third frame 260, which contains video data of all of the area corresponding to the object 241. The video processor 120 may perform such determination based on the motion vectors of the objects 241, 251 and 261 and the background 243, 253 and 263.

The video processor 120 acquires the video data of the pixel area 265 selected as above, and compensates for the hole area 335 by applying the acquired video data to the hole area 335.

Further, the video processor 120 generates a virtual reference frame 410, and fills a predetermined position 415 of the reference frame 410 with the acquired video data. The corresponding position may be variously determined according to characteristics of the reference frame 410 to be generated by the video processor 120.

The reference frame 410 contains video data only in area 415 and no data in other area 417. The video processor 120 stores the reference frame 410 containing the video data in only the area 415.

The video processor 120 generates a 3D video frame 330 with regard to each of 2D video frames 240, 250 and 260 through the foregoing processes. Then, the video processor 120 fills the region 417, which contains no video data in the previously stored reference frame 410, with the video data acquired for compensating the hole area 335 in each generating stage.

The video processor 120 may be provided with not only one reference frame 410 but a plurality of reference frames according to contents of video data.

While compensating for the hole area 335 of the 3D video frame 330, the video processor 120 acquires the corresponding video data from the reference frame 410 if the video data for the compensation is present in the reference frame 410.

On the other hand, if the video data for the compensation is not present in the reference frame 410, the video processor 120 compensates the hole area 335 with the video data acquired from a 2D video frame 260 as described above, and updates the video data of the reference frame 410.

If the video data contained in the reference frame 410 increases as the foregoing processes are repeated, the video processor 120 can easily acquire the video data for the compensation from the reference frame 410 with regard to the hole area 335.

In brief, the video processor 120 generates the reference frame 410 on the basis of at least one frame 240, 260 different from the frame 250 used as the source of generating the 3D video frame 330 among the plurality of 2D video frames 240, 250 and 260. In other words, the video processor 120 accumulatively stores a history of the video data acquired from the frames 240 and 260 for the compensation of the hole area 335, and acquires the video data for the compensation from the stored history.

Accordingly, it is possible to reduce a calculation amount and a system load.

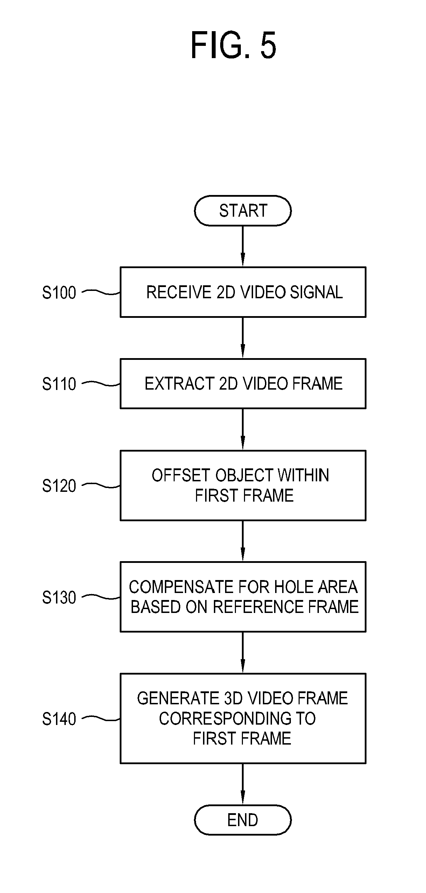

Below, a method of generating a 3D video frame from a 2D video signal in the image processing apparatus 1 according to an exemplary embodiment will be described with reference to FIG. 5. FIG. 5 is a control flowchart showing these operations.

As shown in FIG. 5, at operation S100, the video receiver 110 receives a 2D video signal. At operation S110, the video processor 120 extracts a 2D video frame from the received 2D video signal.

At operation S120, the video processor 120 offsets the object in a first frame of the extracted 2D video frame on the basis of a preset vector value. Such an offset causes a hole area in the pixel data.

At operation S130, the video processor 120 reads the preset reference frame and compensates for the hole area on the basis of the read reference frame. Thus, at operation S140, the video processor 120 generates a 3D video frame corresponding to the first frame.

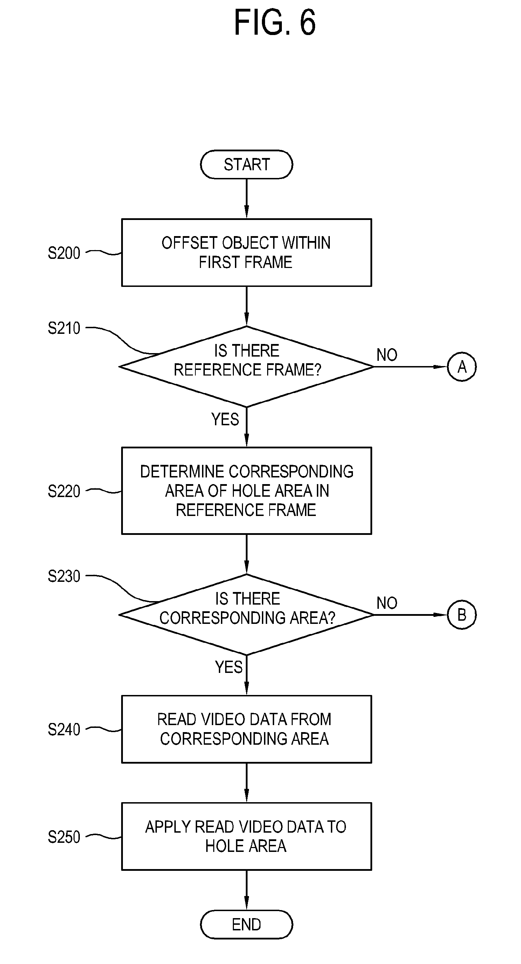

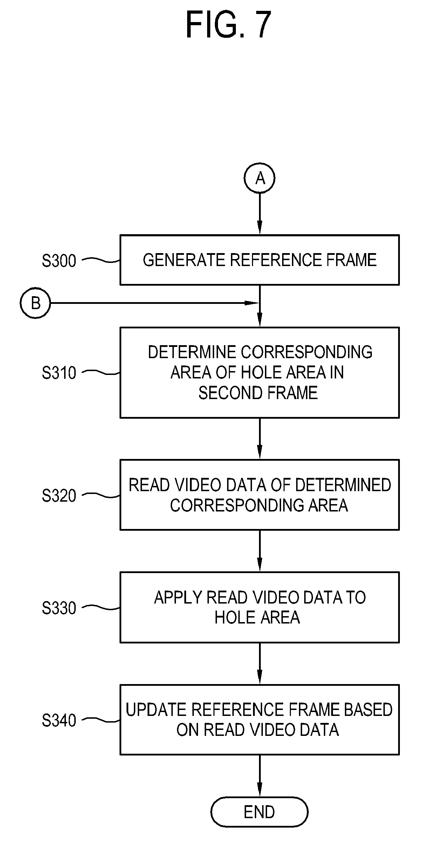

Below, a method of generating and updating the reference frame in the image processing apparatus 1 according to an exemplary embodiment will be described with reference to FIGs. 6 and 7. FIGs. 6 and 7 are control flowcharts showing these operations.

As shown in FIG. 6, at operation S200, the video processor 120 offsets an object in the first frame among 2D video frames.

At operation S210, the video processor 120 ascertains whether the reference frame is present. If the reference frame is present, at operation S220 the video processor 120 determines whether there is an area corresponding to the hole area in the reference frame. That is, the video processor 120 determines whether there is video data corresponding to the hole area, of the video data contained in the reference frame.

If it is determined that the area corresponding to the hole area is present in the reference frame at operation S230, the video processor 120 reads the video data from the corresponding area at operation S240.

At operation S250, the video processor 120 applies the read data to the hole area, thereby generating a 3D video frame.

Meanwhile, as shown in FIG. 7, if it is determined that the reference frame is not present in the operation S210 of FIG. 6, the video processor 120 generates a reference frame S300. Of course, the generated reference frame contains no video data.

At operation S310, the video processor 120 determines an area corresponding to the hole area in the second frame different from the first frame among the 2D video frames. This operation S310 is performed even if it is determined that the area corresponding to the hole area is not present in the reference frame in the operation S230 of FIG. 6.

At operation S320, the video processor 120 reads video data of the determined corresponding area in the second frame. At operation S330, the video processor 120 applies the read video data to the hole area.

At operation S340, the video processor 120 updates the reference frame on the basis of the read video data.

With these operations, the reference frame is generated and updated, so that the video processor 120 can compensate the hole area on the basis of the reference frame.

Meanwhile, the reference frame can be generated by a method different from the foregoing exemplary embodiment. For example, the reference frame may be contained in the 2D video signal received in the video receiver 110. When processing the 2D video signal, the video processor 120 may extract and store the reference frame from the 2D video signal.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. A control method of an image processing apparatus, the method comprising:
receiving a two-dimensional (2D) video signal containing a plurality of 2D video frames;
offsetting an object in a first frame among the plurality of 2D video frames to generate a three-dimensional (3D) video frame corresponding to the first frame; and
generating the 3D video frame corresponding to the first frame by compensating a hole area of pixel data generated due to the offset of the object in the first frame based on a preset reference frame.

2. The method according to claim 1, wherein the preset reference frame is generated based on at least one second frame different from the first frame among the plurality of 2D video frames.

3. The method according to claim 1, wherein the generating the 3D video frame corresponding to the first frame comprises:
determining a pixel area corresponding to the hole area in the preset reference frame; and
applying the pixel data of the determined pixel area in the preset reference frame to the hole area.

4. The method according to claim 3, wherein the determining the pixel area corresponding to the hole area in the preset reference frame comprises:
compensating the hole area with pixel data of at least one second frame different from the first frame among the plurality of 2D video frames if the pixel area corresponding to the hole area is not present in the preset reference frame; and
updating the preset reference frame based on the pixel data compensating for the hole area.

5. The method according to claim 1, wherein the 2D video signal further comprises the preset reference frame, and
the generating the 3D video frame corresponding to the first frame comprises extracting and storing the preset reference frame from the 2D video signal.

6. The method according to claim 1, wherein the generating the 3D video frame corresponding to the first frame comprises displaying the generated 3D video frame.

7. An image processing apparatus comprising:
a video receiver which receives a two-dimensional (2D) video signal containing a plurality of 2D video frames; and
a video processor which offsets an object in a first frame among the plurality of 2D video frames, and generates a three-dimensional (3D) video frame corresponding to the first frame by compensating a hole area of pixel data generated due to the offsetting of the object in the first frame based on a preset reference frame.

8. The image processing apparatus according to claim 7, wherein the video processor generates the preset reference frame based on at least one second frame different from the first frame among the plurality of 2D video frames.

9. The image processing apparatus according to claim 7, wherein the video processor determines a pixel area corresponding to the hole area in the preset reference frame; and applies pixel data of the determined pixel area in the preset reference frame to the hole area.

10. The image processing apparatus according to claim 9, wherein the video processor compensates the hole area with pixel data of at least one second frame different from the first frame among the plurality of 2D video frames if the pixel area corresponding to the hole area is not present in the preset reference frame, and updates the preset reference frame based on the pixel data compensating for the hole area.

11. The image processing apparatus according to claim 7, wherein the 2D video signal further comprises the preset reference frame, and
the video processor extracts and stores the preset reference frame from the 2D video signal.

12. The image processing apparatus according to claim 7, further comprising a display unit which displays the generated 3D video frame.
